# EUROPÄISCHE PATENTSCHRIFT

(11) **EP 0 881 122 B1**
(45) Veröffentlichungstag und Bekanntmachung des Hinweises auf die Patenterteilung: **02.05.2007**
(21) Anmeldenummer: 98109454.3
(22) Anmeldetag: 25.05.1998
(51) Int. Cl.: B60Q 1/50, B60Q 3/02, G09F 21/04

(54) **Anzeigevorrichtung, insbesondere für Omnibus**
Indication device, particularly for bus
Dispositif d'indication, en particulier pour autobus

(30) Priorität: 30.05.1997 DE 19722682
(43) Veröffentlichungstag der Anmeldung: 02.12.1998
(73) Patentinhaber: EvoBus GmbH, 70567 Stuttgart (DE); Gorba AG, 9245 Oberbüren (CH)
(72) Erfinder: Noll, Barbara, 89129 Setzingen (DE); Nahrgang, Helmut, 78476 Allensbach (DE)
(74) Vertreter: Grünecker, Kinkeldey, Stockmair & Schwanhäusser Anwaltssozietät

(56) Entgegenhaltungen:
- WO-A-99/17267
- FR-A- 1 565 942
- GB-A- 2 098 374
- US-A- 5 022 171
- US-A- 5 471 773

## Beschreibung

Die Erfindung betrifft eine Anzeigevorrichtung, insbesondere in einem Omnibus, mit wenigstens einer Befestigungseinrichtung zur lösbaren Halterung eines Anzeigefeldes, wobei zumindest zwischen dem Anzeigefeld und einem Betrachter eine Sichtscheibe angeordnet ist.

Die Befestigungseinrichtung ist direkt an der dem Betrachter abgewandten Innenseite der Sichtscheibe lösbar befestigt. Dadurch wird die Anzeigevorrichtung direkt durch die Sichtscheibe gehalten. Eine separate Verschraubung oder anderweitige Befestigung an Rahmenelementen des Fahrzeugs ist nicht erforderlich. Die Anzeigevorrichtung wird dadurch insgesamt leichter und kleiner. Da die Anzeigevorrichtung auf diese Weise mit ihrem Anzeigenfeld in geringem Abstand zur Sichtscheibe angeordnet werden kann, weist die Anzeigevorrichtung eine geringere Tiefe auf, so daß kleinere Einbauräume beispielsweise im Dachbereich des Fahrzeugs benötigt werden oder die Anzeigevorrichtung in erheblich geringerem Maße in den Fahrgastraum vorsteht.

Um eine Beschädigung oder Verschmutzung des Anzeigefeldes zu verhindern, weist die Anzeigevorrichtung eine das Anzeigefeld zumindest auf seiner der Verglasung abgewandten Rückseite abdeckende Verkleidung auf. Insbesondere bei im Fahrgastraum angeordneten Anzeigevorrichtungen ist auf diese Weise ein Berühren des Anzeigefeldes durch einen Fahrgast sowohl hinsichtlich einer möglichen Vertetzungsgefahr als auch hinsichtlich einer Beschädigung des Anzeigefeldes weitestgehend ausgeschlossen.

Aus der Praxis sind solche Anzeigevorrichtungen aus Fahrzeugen des öffentlichen Verkehrs, wie Straßenbahnen und Omnibussen, als Fahrtzielanzeigen bekannt. Solche Anzeigen sind vorschriftsmäßig im Bug, auf beiden Seiten und im Heck des jeweiligen Fahrzeugs anzuordnen. Die Fahrtzielanzeigen können sowohl das Fahrtziel des Fahrzeugs als auch eine dieser bestimmten Linie des öffentlichen Verkehrsmittels zugeordnete Nummer anzeigen.

Die Anzeigevorrichtungen sind mittels einer Befestigungseinrichtung in der Regel direkt an Rahmenbauteilen des jeweiligen Fahrzeugs und in dessen Dachbereich angeordnet. Solche im Dachbereich angeordnete Anzeigevorrichtungen sind vom Fahrgastraum her normalerweise nicht sichtbar. Durch die Größe dieser Anzeigevorrichtung wird allerdings relativ viel Platz im Dachbereich benötigt, wodurch beispielsweise weniger Platz für den Fahrgastraum verbleibt. Sind diese vorbekannten Anzeigevorrichtungen direkt innerhalb des Fahrgastraums durch ihre Befestigungseinrichtung aufgehängt, bilden sie eine Gefahrenquelle für Fahrgäste mit nicht zu vernachlässigender Verletzungsgefahr. Weiterhin sind die vorbekannten Anzeigevorrichtungen relativ voluminös und schwer, so daß die Befestigungseinrichtungen entsprechend stabil aufgebaut sein müssen und ausreichende Einbauräume im Fahrzeug zur Verfügung gestellt werden müssen.

Ein weiterer Nachteil bei den bekannten Anzeigevorrichtungen ist, daß das eigentliche Anzeigefeld mittels einer separaten Sichtscheibe abgedeckt, so daß zwischen dieser Sichtscheibe und einer weiteren die Anzeigevorrichtung im Fahrzeug nach außen abdeckenden Scheibe störende Reflektionen auftreten können, die die Lesbarkeit der Anzeige beeinträchtigen können.

Aus dem Dokument US 5,471,773 ist eine Anzeigevorrichtung bekannt, die eine Rückwand 10 umfasst, eine Elektrolumineszenzlampe 12, ein Anzeigefeld 18 und Klebestreifen zur Befestigung der Anzeigevorrichtung direkt auf eine Innenseite einer Scheibe 22 eines Kraftfahrzeugs.

Der Erfindung liegt daher die Aufgabe zugrunde, die vorbekannte Anzeigevorrichtung dahingehend zu verbessern, daß diese kleinere Abmessungen und ein geringeres Gewicht aufweist und gleichzeitig kostengünstig herstellbar und einbaubar sowie besser lesbar ist.

Diese Aufgabe wird durch die Merkmale des Anspruchs 1 gelöst.

Die Verkleidung der erfindungsgemäßen Anzeigevorrichtung ist dadurch gebildet, daß sie ein Rahmenbauteil und eine rückseitige Abdeckung umfaßt, welche miteinander lösbar befestigt sind und von welchen ein zumindest teilweise das Anzeigefeld umgebender Randflansch gehalten ist. Rahmenbauteil und rückseitige Abdeckung sind so gebildet, daß das Rahmenbauteil das Anzeigenfeld im wesentlichen als Umrandung umgibt und mit diesem befestigt ist, wobei die rückseitige Abdeckung direkt am Rahmenbauteil und/oder am Anzeigefeld befestigt wird.

In diesem Zusammenhang ist es weiterhin als vorteilhaft zu betrachten, wenn die Sichtscheibe durch eine scheibenförmige Verglasung gebildet ist. Dadurch kann auf eine die Lesbarkeit der Anzeige negativ beeinflussende, separate Sichtscheibe für das Anzeigenfeld verzichtet werden und die Anzeigevorrichtung wird insgesamt direkt an einer im Fahrzeug vorgesehenen Verglasung angebracht.

Die scheibenförmige Verglasung kann in diesem Zusammenhang Teil einer Front- oder Heck- oder Seitenverglasung in einem Omnibus oder anderen Fahrzeug sein. Somit wird die Anzeigevorrichtung direkt an den bereits im Fahrzeug vorhandenen Scheiben angebracht, ohne daß beispielsweise ein Sichtfeld eines Fahrgastes oder eines Fahrers eingeschränkt wird, da die Anzeigevorrichtung in der Regel am oberen Ende der Scheiben angeordnet ist.

Weiterhin kann von Vorteil sein, wenn Anzeigevorrichtung und zugehörige Verglasung oberhalb und beabstandet zu Front- oder Heck- oder Seitenverglasungen im Fahrzeug angeordnet sind. Dies betrifft insbesondere im Dachbereich und getrennt vom eigentlichen Fahrgastraum angeordnete Anzeigevorrichtungen. Allerdings ist, wie bereits vorangehend ausgeführt, aufgrund der direkten Anbringung der Anzeigevorrichtung an der Innenseite der Verglasung der benötigte Einbauraum vergleichsweise gering, was insbesondere bei Fahrzeugen der Niederflurtechnik von Vorteil ist, die immer mehr Platz im Dachbereich benötigen.

Durch die geringeren benötigten Einbauräume für die erfindungsgemäße Vorrichtung ergibt sich eine Kosteneinsparung, da beispielsweise der eingesparte Raum anderweitig nutzbar ist oder eine entsprechende Verkleidung des Einbauraums eine geringere Größe aufweist.

Vorzugsweise kann die Befestigungseinrichtung direkt auf die Innenseite der Verglasung aufgeklebt werden. Eine andere lösbare Befestigung für die Befestigungseinrichtung kann beispielsweise durch Verschrauben oder dergleichen erfolgen.

Um das Anzeigenfeld und damit die Anzeigevorrichtung insgesamt relativ stabil an der Verglasung zu befestigen, kann die Befestigungseinrichtung durch sich zumindest teilweise entlang des Anzeigenfeldes erstreckende Befestigungsschienen gebildet sein. An diesen Befestigungsschienen kann das Anzeigenfeld direkt oder indirekt durch Aufschieben, Verschrauben, Verrasten oder dergleichen befestigt sein.

Bei den in der Regel verwendeten, im wesentlichen rechteckigen Anzeigefeldern erweist es sich als ausreichend, wenn die Befestigungsschienen sich zumindest entlang von Längsseiten des Anzeigefeldes erstrecken. Beispielsweise kann das Anzeigefeld durch entsprechend an ihm ausgebildete Schiebeführungen auf die Befestigungsschiene in deren Längsrichtung aufgeschoben werden.

Bei einem einfachen Ausführungsbeispiel kann der Randflansch sich entlang der Längsseiten des Anzeigefeldes erstrecken und das Rahmenbauteil aus zwei Flachprofilen gebildet sein, die einseitig am Randflansch anliegen und zwischen denen und entsprechend an der rückseitigen Abdeckung ausgebildeten Anlageflächen oder -vorsprüngen der Randflansch angeordnet und durch lösbare Befestigung, insbesondere mittels Schrauben, von Abdeckung und Flachprofilen zwischen diesen gehalten ist. Dabei kann zwischen den Flachprofilen und den Anlageflächen eine Ausnehmung zur form- oder kraftschlüssigen Aufnahme zumindest eines Teils des Randflansches ausgebildet sein.

Um den Randflansch nicht nur in einer Ausnehmung zwischen Abdeckung und Flachprofilen zu halten, können in den Randflanschen Bohrungen und/oder Ausnehmungen zur Aufnahme von Schrauben zur lösbaren Befestigung von Abdeckung, Randflansch und Flachprofilen ausgebildet sein. In diesem Fall wird einseitig zum Randflansch ein Flachprofil angeordnet und dieses mittels der durch die Bohrungen und/oder Ausnehmungen im Randflansch hindurchgeführten Schrauben mit der Abdeckung insbesondere im Bereich der Anlageflächen befestigt.

Eine Abdeckung mit geringen Abmessungen, durch die die Tiefe der Anzeigevorrichtung weiterhin vermindert wird, weist im wesentlichen die Form einer flachen Abdeckschale auf, wobei ein Schalenboden das Anzeigefeld rückseitig abdeckt und vom Schalenboden in Richtung Verglasung vorstehende Schalenwände das Anzeigefeld vorzugsweise allseitig umgeben.

Um das Anzeigefeld vor einer Verschmutzung und einer Beschädigung beispielsweise durch Feuchtigkeit oder Anfassen zu schützen, können die Schalenwände mit ihren freien Enden bei an der Befestigungseinrichtung lösbar befestigtem Anzeigefeld abdichtend an der Innenseite der Sichtscheibe oder Verglasung anliegen.

Um das Anzeigefeld besser handhaben und gleichzeitig schützen zu können, können Anzeigefeld und Verkleidung eine vormontierbare Baueinheit bilden.

Um eine stabile Befestigung des Anzeigefeldes an der Befestigungseinrichtung zu ermöglichen, können Anzeigefeld und/oder Verkleidung mit den Befestigungsschienen im Bereich des Randflansches beziehungsweise der Flachprofile lösbar verbunden sein. Dies kann beispielsweise durch von der Rückseite der Abdeckung eingesetzte, Randflansch und Flachprofile durchsetzende, in die Befestigungsschiene eingeschraubte Schrauben erfolgen.

Im einfachsten Fall weisen die Befestigungsschienen einen im wesentlichen T-förmigen Querschnitt auf, wobei der T-Steg auf der Innenseite der Verglasung aufgeklebt ist und am T-Fuß Anzeigefeld und/oder Verkleidung lösbar befestigt sind. Die gesamte Oberseite des T-Stegs kann dabei als Klebefläche dienen. Der T-Fuß kann einen vergrößerten Fußbereich aufweisen, in dem eine Einschrauböffnung zum Einschrauben einer Befestigungsschraube ausgebildet ist.

Um beispielsweise das Anzeigefeld durch einen Rahmen auf der Verglasung hervorzuheben und gleichzeitig die möglicherweise unsauberen oder anderweitig das Gesamterscheinungsbild negativ beeinflussenden Klebestellen zwischen Halteschienen und Innenseite der Verglasung nach außen abzudecken, kann auf der Innenseite der Verglasung zumindest im Bereich der aufgeklebten T-Stege eine Abdeckschicht, insbesondere durch Siebdruck, aufgebracht sein.

Bei einem einfachen Ausführungsbeispiel kann entlang des Anzeigefeld ein Rollband geführt werden, das mechanisch mittels zweier an Enden des Anzeigefeldes angeordneter, drehbarer Rollen abspulbar ist. Bevorzugt ist allerdings ein Anzeigefeld, das eine Vielzahl von einzeln ansteuerbaren Einzelanzeigeelementen aufweist. Diese sind beispielsweise matrixförmig angeordnet und je nach Ansteuerung der Einzelanzeigeelemente werden unterschiedliche Anzeigen realisiert. Die Anzeige kann dabei auch als Laufschrift oder dergleichen dem Betrachter dargestellt werden.

Ein solches Einzelanzeigeelement kann beispielsweise ein relativ preiswertes, elektromagnetisch ansteuerbares, scheibchenförmiges, drehbar gelagertes, zweifarbiges Einzelanzeigeelement sein. Je nach Drehstellung des Scheibchens ist das Einzelanzeigeelement aktiviert oder deaktiviert.

Bei solchen an sich bekannten, aus den elektromagnetisch ansteuerbaren Einzelanzeigeelementen zusammengesetzten Anzeigefeldern erfolgt in der Regel eine zusätzliche Beleuchtung durch eine Leuchtstoffröhre, die insbesondere bei Dunkelheit oder bei Sonneneinstrahlung die in der Regel reflektierende Anzeigeseite des Einzelanzeigeelements besser ausleuchtet.

Eine platzsparende und preiswerte Alternative zur Leuchtstoffröhrenausleuchtung ist dadurch erhältlich, daß jedem Einzelanzeigeelement eine Leuchtdiode (LED) zur Ausleuchtung der Anzeigeseite des Einzelanzeigeelements zugeordnet ist. Solche Leuchtdioden weisen beispielsweise einen Strombedarf auf, der geringer als derjenige einer entsprechenden Leuchtstoffröhre ist.

Zur Ansteuerung und Programmierung der Anzeigevorrichtungen und insbesondere Anzeigefelder kann eine Anzeigesteuerung beispielsweise in der Anzeigevorrichtung angeordnet sein, die mit einem im Fahrzeug angeordneten Bussystem verbunden ist. Über das Bussystem ist die Anzeigevorrichtung beispielsweise vom Fahrerplatz ansteuerbar und verschiedene in der Anzeigesteuerung oder zentral in einer entsprechenden Elektronik am Fahrerplatz abgespeicherte Programme für verschiedene Anzeigen können abgerufen werden.

Bei der vorangehend geschilderten Anzeigevorrichtung ist es natürlich ebenfalls möglich, bei einer oder mehreren der in einem Fahrzeug des öffentlichen Nah- oder Regionalverkehrs angeordneten Anzeigevorrichtungen diese mit einem von außerhalb des Fahrzeugs und einem vom Fahrgastraum her sichtbaren Anzeigefeld auszustatten. Diese können beispielsweise mit ihren Rückseiten in Anlage sein, wobei in der entsprechenden Verkleidung eine Öffnung angeordnet ist, durch die das dem Fahrgastraum zuweisende Anzeigefeld sichtbar ist. Die Öffnung kann durch eine entsprechende Sichtscheibe abgedeckt sein.

Die Anzeigevorrichtung kann eine alphanumerische und/oder eine numerische Anzeige aufweisen. Weiterhin können beispielsweise gewisse Piktogramme wie ein Piktogramm für "Rauchverbot" oder dergleichen, darstellbar sein.

Weiterhin ist es möglich, die erfindungsgemäße Anzeigevorrichtung auch außerhalb von Fahrzeugen zur Fahrtzielanzeige oder dergleichen beispielsweise an Bahnhöfen, Flughäfen und Haltestellen einzusetzen.

Im folgenden werden vorteilhafte Ausführungsbeispiele der Erfindung anhand der in der Zeichnung beigefügten Figuren näher erläutert und beschrieben.

Es zeigen:
- Figur 1: eine prinzipielle Darstellung einer an einer Frontverglasung eines teilweise dargestellten Omnibusses befestigten erfindungsgemäßen Anzeigevorrichtung;
- Figur 2: eine prinzipielle Darstellung einer im Dachbereich eines teilweise dargestellten Omnibusses angeordneten Anzeigevorrichtung;
- Figur 3: eine prinzipielle Darstellung einer an einer Seitenverglasung eines teilweise dargestellten Omnibusses angeordneten Anzeigevorrichtung;
- Figur 4: eine prinzipielle Darstellung einer an einer Heckverglasung eines teilweise dargestellten Omnibusses angeordneten Anzeigevorrichtung;
- Figur 5: eine vergrößerte Darstellung des Details X aus Figur 4, und
- Figur 6: eine perspektivische Vorderansicht eines Anzeigefeldes zur Verwendung bei der erfindungsgemäßen Anzeigevorrichtung.

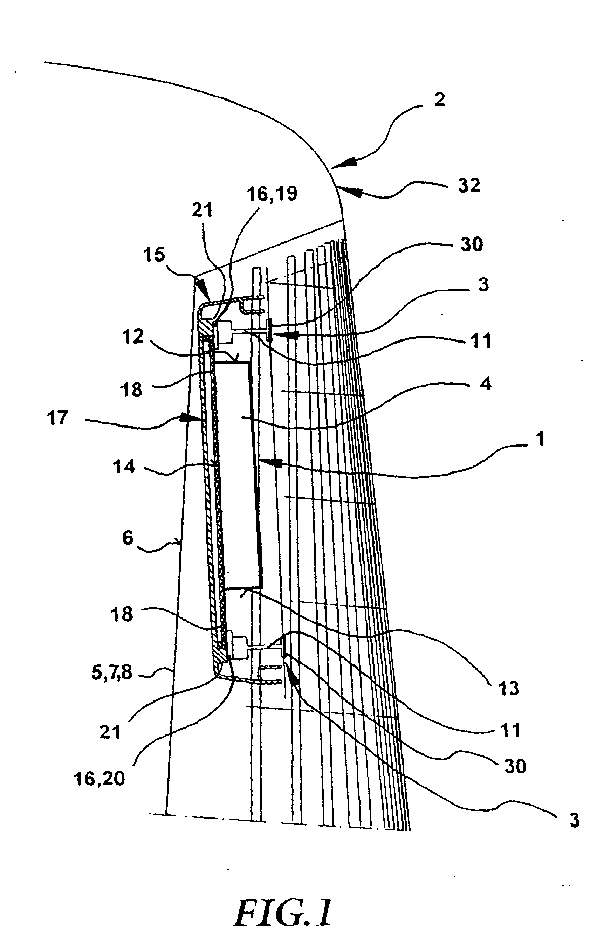

In den folgenden Figuren 1 bis 4 ist jeweils eine erfindungsgemäße Anzeigevorrichtung an unterschiedlichen Stellen innerhalb eines teilweise dargestellten Omnibusses angeordnet. Die jeweilige Anzeigevorrichtung ist in seitlicher und teilweise geschnittener Ansicht dargestellt. Gleiche Bezugszeichen kennzeichnen gleiche Teile und gelten für alle Anzeigevorrichtungen nach Figuren 1 bis 4.

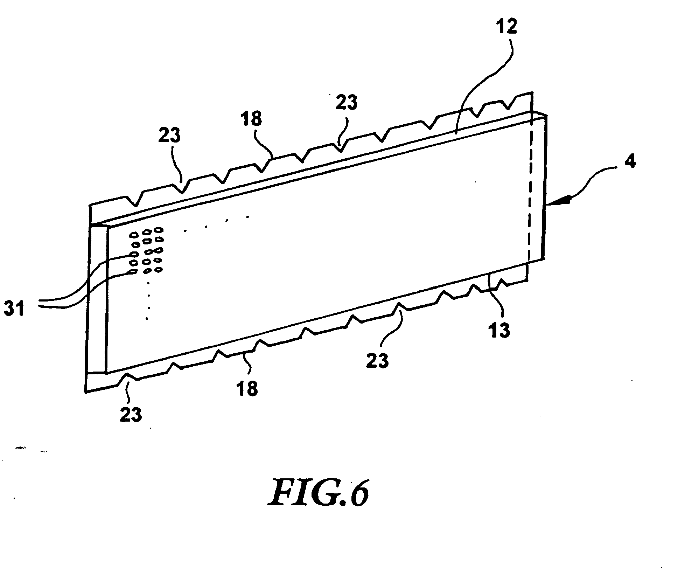

Die Anzeigevorrichtung 1 weist eine Befestigungseinrichtung 3, ein Anzeigefeld 4 und eine Verkleidung 15 auf. Das Anzeigefeld 4 hat eine im wesentlichen rechteckförmige Form, siehe Figur 6, und erstreckt sich quer zur jeweiligen Sichtscheibe 5, beziehungsweise Verglasung 7, an deren Innenseite 6 es mittels der zugehörigen Befestigungseinrichtung 3 lösbar befestigt ist.

Das Anzeigefeld 4 ist durch die Verglasung 7 sichtbar, so daß mittels des Anzeigefeldes dargestellte alphanumerische oder andere Anzeigen durch einen sich außerhalb des Fahrzeugs befindenden Betrachter ablesbar sind.

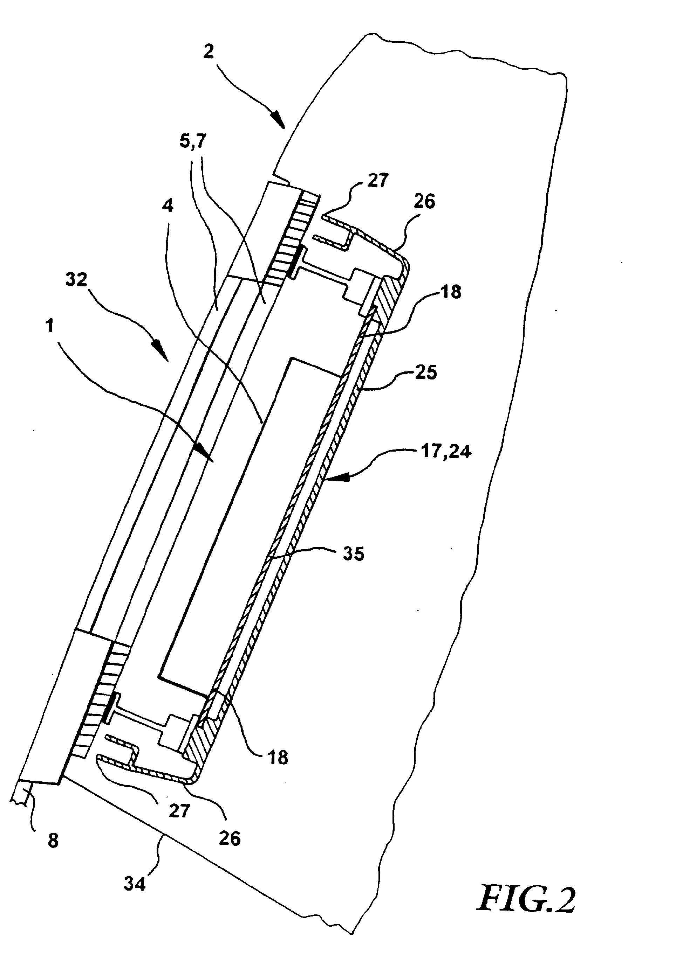

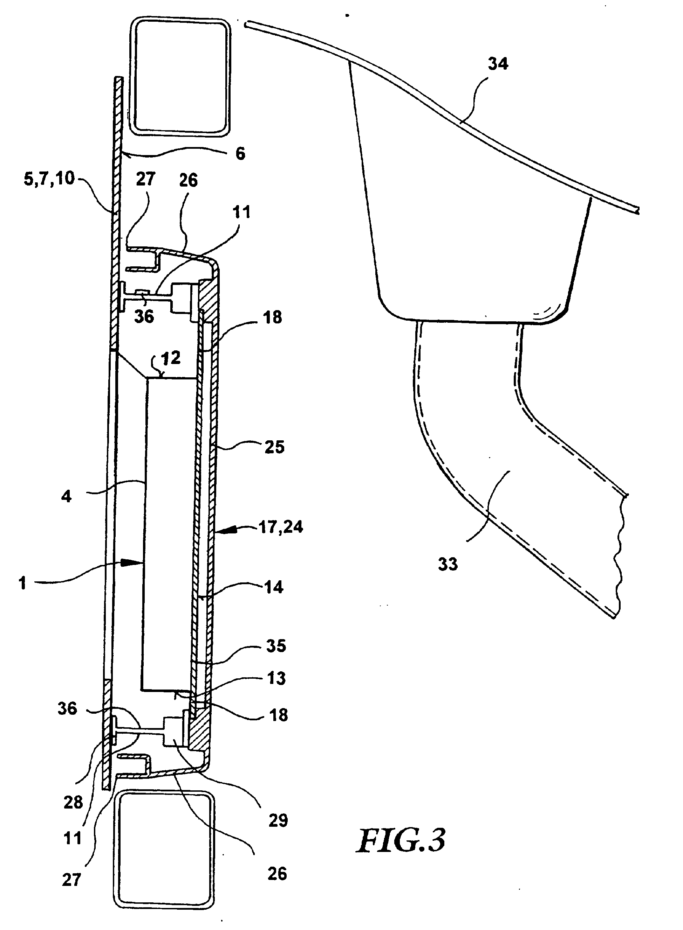

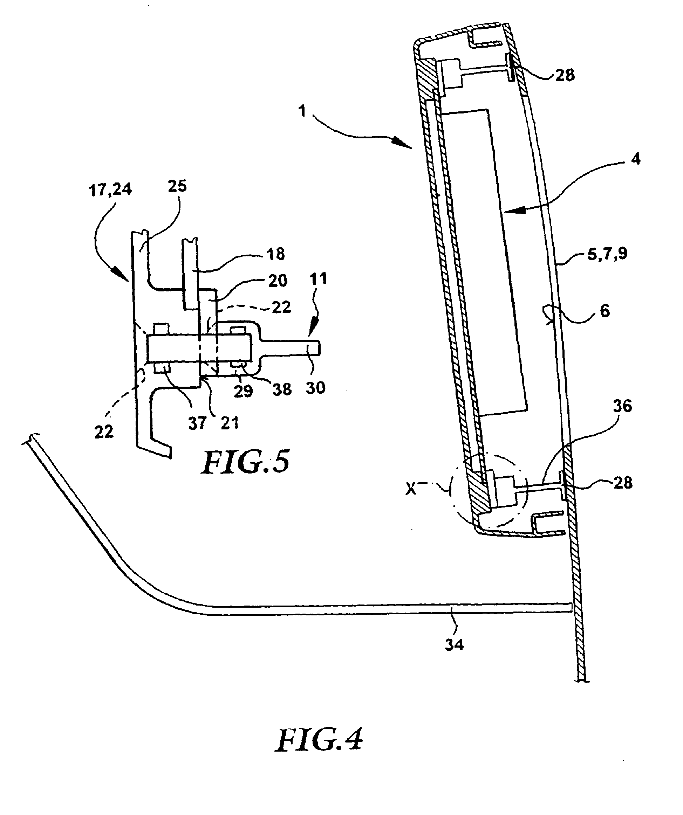

In Figur 1 ist die Anzeigevorrichtung 1 auf der Innenseite 6 einer Frontverglasung 8, in Figur 2 auf der Innenseite einer Doppelverglasung 7 in einem Dachbereich 32 eines Omnibusses 2, in Figur 3 auf der Innenseite einer Seitenverglasung 10 und in Figur 4 auf der Innenseite einer Heckverglasung 9 befestigt.

Bezüglich der Figur 3 sei angemerkt, daß eine entsprechende Anzeigevorrichtung analog auf der gegenüberliegenden Seitenverglasung in Fahrtrichtung angeordnet ist.

Das Anzeigefeld 4 nach Figur 1 ist am oberen Ende unterhalb des Dachbereichs 32 an der Frontverglasung 8 befestigt. Wie bei den Anzeigefeldern der übrigen Figuren weist das Anzeigefeld 4 nach Figur 1 einen entlang der Längsseiten 12, 13, siehe auch Figur 6, nach oben und unten jeweils vorstehenden Randflansch 18 auf. Dieser verläuft im wesentlichen geradlinig und kann als Teil einer Rückplatte 35, siehe beispielsweise Figur 2, ausgebildet sein. Diese dient als rückseitiger Träger des Anzeigefeldes 4.

Die Randflansche 18 sind in einer entsprechenden Schlitzausnehmung in einer Verkleidung 15 eingesteckt. Die Verkleidung 15 ist aus einem Rahmenbauteil 16 und einer rückseitigen Abdeckung 17 gebildet. Das Rahmenbauteil 16 ist zweiteilig aus zwei Flachprofilen 19 und 20 aufgebaut, die sich entlang der oberen und unteren Längsseiten 12, 13 des Anzeigefeldes 4 entsprechend erstrecken. Das obere Flachprofil 19 liegt zumindest teilweise von einer Seite am Randflansch 18 an, wobei eine entsprechende Anlagefläche oder Anlagevorsprung 21 auf einer Innenseite der rückseitigen Abdeckung 17 von der jeweils anderen Seite am Randflansch 18 anliegt.

Flachprofile 19, 20, Randflansche 18 und rückseitige Abdeckung 17 sind als vormontierbare Baueinheit ausgebildet. Zur Montage dieser Baueinheit sind Schrauben von Seiten der Flachprofile 19, 20 in diese, in den Randflansch 18 und in die rückseitige Abdeckung 17 eingeschraubt.

Zur Halterung des Anzeigefeldes 4 beziehungsweise der vormontierten Baueinheit aus Anzeigefeld 4 und Verkleidung 15 sind weitere Schrauben von der Rückseite der Abdeckung 17 durch diese, den Randflansch 18 und die Flachprofile 19, 20 in die Befestigungseinrichtung 3 einschraubbar. Die Befestigungseinrichtung 3 ist durch zwei Befestigungsschienen 11 gebildet, die sich ebenfalls im wesentlichen parallel zu den Längsseiten 12 und 13 und beabstandet zu diesen erstrecken.

Die Befestigungsschienen 11 sind im Querschnitt T-förmig, wobei der T-Steg 28, siehe beispielsweise Figuren 3 oder 4, mit seiner zur jeweiligen Verglasung 7, 8, 9 oder 10 weisenden Oberseite auf deren Innenseite 6 aufgeklebt ist. Ein T-Schenkel 36, siehe beispielsweise Figuren 3 und 4, steht im wesentlichen senkrecht und mittig vom T-Steg 28 in Richtung Flachprofile 19, 20 oder Randflansch 18 ab. Am freien Ende des T-Schenkels ist ein T-Fuß 29 ausgebildet, der C-förmig ausgebildet ist, wobei durch die C-Form eine sich parallel zu den Längsseiten 12, 13 erstreckende Schiebeführung gebildet ist.

Bei einem anderen Ausführungsbeispiel kann der T-Fuß 29 an entsprechenden Stellen in Richtung der Flachprofile 19, 20 offene Blindbohrungen enthalten, in die Schrauben zur Befestigung von Flachprofilen 19, 20, Randflanschen 18 und rückseitiger Abdekkung 17 einschraubbar sind. Entsprechende Schrauben sind auch mit der Schiebeführung, siehe beispielsweise Figur 5, im C-förmigen, T-Fuß verschraubbar oder in anderer entsprechender Weise dort befestigbar.

Zur Abdeckung der durch die Oberseiten der T-Stege 28 gebildeten Klebeflächen nach außen in Richtung eines Betrachters ist eine Abdeckschicht 30 auf der Innenseite 6 der jeweiligen Verglasung aufgetragen. Diese kann beispielsweise durch Siebdruck aufgetragen werden. Die Abdeckschicht 30 umgibt das Anzeigefeld 4 zumindest entlang der Befestigungsschienen 11, wobei eine entsprechende Abdeckschicht auch zur weiteren Umrandung des Anzeigefeldes 4 parallel zu dessen die Längsseiten verbindenden Querseiten aufgetragen sein kann.

In Figur 2 ist die Anzeigevorrichtung 1 in dem Dachbereich 32 des Omnibusses 2 oberhalb einer entsprechenden Deckenverkleidung 34, das heißt außerhalb des Fahrgastraumes, angeordnet. Die Verglasung 7 ist in diesem Fall eine Doppelverglasung, wobei sich die entsprechende Frontverglasung 8 unterhalb der im Deckenbereich 32 angeordneten Doppelverglasung 7 beabstandet zu dieser anschließt.

Sonstiger Aufbau und Anordnung der Anzeigevorrichtung 1 nach Figur 2 ist entsprechend zu Figur 1.

In Figur 3 ist die Anzeigevorrichtung 1 auf der Innenseite 6 an einem oberen Ende der Seitenverglasung aufgeklebt. Auf der dem Fahrgastraum zugewandten Rückseite der Abdeckung 17 ist im Fahrgastraum eine Haltestange 33 angeordnet, die teilweise dargestellt ist. Diese ist in bekannter Weise an einer Deckenverkleidung 34 des Omnibusses befestigt.

In Figuren 2 und 3 ist insbesondere eine die rückseitige Abdeckung 17 bildende Abdeckschale 24 mittels Bezugszeichen gekennzeichnet. Die Abdeckschale 24 weist einen ebenen Schalenboden 25 und von diesem in Richtung Innenseite 6 der entsprechenden Verglasung 7 vorstehende Schalenwände 26 auf. Diese erstrecken sich außerhalb der Befestigungsschienen 11 und umgeben das Anzeigefeld 4 zumindest entlang seiner Längsseiten 12 und 13. Freie Enden 27 der Schalenwände 26 sind bei dem dargestellten Ausführungsbeispiel im wesentlichen U-förmig ausgebildet, wobei in der U-Form ein entsprechendes, abdichtend an er Innenseite 6 der jeweiligen Verglasung anliegendes Dichtelement angeordnet ist (nicht dargestellt).

Bei das Anzeigefeld 4 vollständig umrandenden Schalenwänden 26 ist das Dichtelement als Dichtring von im wesentlichen rechteckiger Form ausgebildet.

Die Anzeigevorrichtung 1 nach Figur 4 ist auf der Innenseite 6 der Heckverglasung 9 oberhalb einer entsprechenden Deckenverkleidung 34, das heißt außerhalb des Fahrgastraums, angeordnet. Entsprechend zum Ausführungsbeispiel nach Figur 2 könnte die Anzeigevorrichtung 1 nach Figur 4 auch oberhalb der eigentlichen Heckverglasung an einer separaten Verglasung im Dachbereich befestigt sein.

Bei allen dargestellten Ausführungsbeispielen der Anzeigevorrichtung ist jeweils die Abdeckschicht 30 zwischen den Befestigungsschienen 11 und der Verglasung angeordnet.

In Figur 5 ist ein Detail "X" aus Figur 4 vergrößert dargestellt. Dieses Detail "X" ist in analoger Weise bei den Anzeigevorrichtungen nach Figuren 1 bis 3 vorhanden.

In Figur 5 ist insbesondere erkennbar, daß mittels einer von Seiten des unteren Flachprofils 20 eingeschraubter Schraube 22 eine vormontierbare Baueinheit aus Flachprofilen 19, 20, Anzeigefeld 4 mit Randflansch 18 und rückseitiger Abdeckung 17 herstellbar ist. Dabei wird die Schraube 22 so weit in eine entsprechende Öffnung des Flachprofils 20 eingeschraubt, bis sie flächenbündig in diesem angeordnet ist. Die Schraube 22 erstreckt sich dabei zumindest bis zu einem in der Anlagefläche beziehungsweise - vorsprung 21 angeordneten Einschraubgewinde 37, mit dem die Schraube verschraubbar ist.

Zur Befestigung dieser vormontierten Baueinheit oder auch zur direkten Befestigung noch nicht miteinander verbundener Flachprofile 19, 20, Randflansche 18 und rückseitiger Abdeckung 17 sind weitere Schrauben 22 vom Schalenboden 25 der Abdeckung 17 her durch Anlagevorsprung 21, Randflansch 18, Flachprofile 19, 20 bis in den T-Fuß 29 der Befestigungsschiene 11 einschraubbar. Ein entsprechendes Einschraubgewinde 38 zum Verschrauben mit den Schrauben 22 ist im T-Fuß 29 ausgebildet.

Bei einer anderen Befestigungsmöglichkeit der vormontierten Baueinheit aus Flachprofilen 19, 20, Anzeigefeld 4 und Abdeckung 17 kann diese auch in im T-Fuß 29 ausgebildeten Schiebeführungen verschiebbar eingesetzt, mit diesen verrastet oder verschraubt werden.

In Figur 6 ist eine perspektivische Vorderansicht eines Anzeigefeldes 4 dargestellt. In den Randflanschen 18 sind entlang der Längsseiten 12, 13 eine Reihe von Bohrungen oder Ausnehmungen 23 angeordnet. Diese dienen zur Aufnahme der entsprechenden Schrauben 22, siehe Figur 5 oder auch Figuren 1 bis 4.

Das Anzeigefeld 4 weist auf seiner der Innenseite der entsprechenden Verglasung zuweisenden Vorderseite eine Vielzahl von Einzelanzeigeelementen 31 auf. Diese sind in Reihen und Spalten matrixförmig angeordnet und durch eine entsprechende, nicht dargestellte Steuerung oder Elektronik einzeln ansteuerbar. Die zugehörige Steuerung oder Elektronik kann dabei im Anzeigefeld 4 oder an einer anderen Stelle innerhalb der Anzeigevorrichtung 1, siehe die vorangehenden Figuren, angeordnet sein.

## Patentansprüche

1. Anzeigevorrichtung (1), insbesondere in einem Omnibus (2), mit wenigstens einer Befestigungseinrichtung (3) zur lösbaren Halterung eines Anzeigefeldes (4), wobei zumindest zwischen dem Anzeigefeld (4) und einem Betrachter eine Sichtscheibe (5) angeordnet ist, wobei die Befestigungseinrichtung (3) direkt an der dem Betrachter abgewandten Innenseite (6) der Sichtscheibe (5) lösbar befestigt ist und die Anzeigevorrichtung (1) eine das Anzeigefeld (4) zumindest auf seiner einer Verglasung (7) abgewandten Rückseite (14) abdeckende Verkleidung (15) aufweist,
**dadurch gekennzeichnet,**
**daß** die Verkleidung (15) ein Rahmenbauteil (16) und eine rückseitige Abdeckung (17) umfaßt, welche miteinander lösbar befestigt sind und von welchen zumindest ein teilweise das Anzeigefeld (4) umgebender Randflansch (18) gehalten ist.

2. Anzeigevorrichtung nach Anspruch 1,
**dadurch gekennzeichnet,**
**daß** die Sichtscheibe (5) durch die scheibenförmige Verglasung (7) gebildet ist.

3. Anzeigevorrichtung nach Anspruch 1 oder 2,
**dadurch gekennzeichnet,**
**daß** die Verglasung (7) Teil einer Front- (8) oder Heck- (9) oder Seitenverglasung (10) in einem Omnibus (2) ist.

4. Anzeigevorrichtung nach wenigstens einem der Ansprüche 1-2,
**dadurch gekennzeichnet,**
**daß** Verglasung (7) und Anzeigevorrichtung (1) oberhalb und beabstandet zu einer Front- (8) oder Heck- (9) oder Seitenverglasung (10) in einem Omnibus (2) angeordnet sind.

5. Anzeigevorrichtung nach wenigstens einem der vorangehenden Ansprüche,
**dadurch gekennzeichnet,**
**daß** die Befestigungseinrichtung (3) auf die Innenseite (6) der Verglasung (7) aufgeklebt ist.

6. Anzeigevorrichtung nach wenigstens einem der vorangehenden Ansprüche,
**dadurch gekennzeichnet,**
**daß** die Befestigungseinrichtung (3) durch sich zumindest teilweise entlang des Anzeigefeldes (4) erstreckende Befestigungsschienen (11) gebildet ist.

7. Anzeigevorrichtung nach Anspruch 6,
**dadurch gekennzeichnet,**
**daß** die Befestigungsschiene (11) sich zumindest entlang von Längsseiten (12, 13) eines im wesentlichen rechteckigen Anzeigenfeldes (4) erstreckt.

8. Anzeigevorrichtung nach wenigstens einem der vorangehenden Ansprüche,
**dadurch gekennzeichnet,**
**daß** der Randflansch (18) sich entlang der Längsseiten (12, 13) des Anzeigenfeldes (4) erstreckt und das Rahmenbauteil (16) aus zwei Flachprofilen (19, 20) gebildet ist, die einseitig am Randflansch (18) anliegen und zwischen denen und entsprechenden, an der rückseitigen Abdeckung (17) ausgebildeten Anlageflächen (21) der Randflansch (18) angeordnet und durch lösbare Befestigung, insbesondere mittels Schrauben (22), von Abdeckung (17) und Flachprofilen (19, 20) zwischen diesen gehalten ist.

9. Anzeigevorrichtung nach wenigstens einem der vorangehenden Ansprüche,
**dadurch gekennzeichnet,**
**daß** der Randflansch (18) Bohrungen und/oder Ausnehmungen (23) zur Aufnahme von Schrauben (22) zur lösbaren Befestigung von Abdeckung (17) und Flachprofilen aufweist.

10. Anzeigevorrichtung nach wenigstens einem der vorangehenden Ansprüche,
**dadurch gekennzeichnet,**
**daß** die rückseitige Abdeckung (17) im wesentlichen die Form einer flachen Abdeckschale (24) aufweist, wobei ein Schalenboden (25) das Anzeigefeld (4) rückseitig abdeckt und vom Schalenboden (25) in Richtung Sichtscheibe (5) oder Verglasung (7) vorstehende Schalenwände (26) das Anzeigefeld (4) vorzugsweise allseitig umgeben.

11. Anzeigevorrichtung nach Anspruch 10,
**dadurch gekennzeichnet,**
**daß** die Schalenwände (26) mit ihren freien Enden (27) bei an der Befestigungseinrichtung (3) lösbar befestigtem Anzeigefeld (4) abdichtend an der Innenseite (6) der Sichtscheibe (5) oder Verglasung (7) anliegen.

12. Anzeigevorrichtung nach wenigstens einem der vorangehenden Ansprüche,
**dadurch gekennzeichnet,**
**daß** Anzeigefeld (4) und Verkleidung (15; 16, 17) eine vormontierbare Baueinheit bilden.

13. Anzeigevorrichtung nach wenigstens einem der vorangehenden Ansprüche,
**dadurch gekennzeichnet,**
**daß** Anzeigefeld (4) und/oder Verkleidung (15; 16, 17) mit den Befestigungsschienen (11) im Bereich des Randflansches (18) beziehungsweise der Flachprofile (19, 20) lösbar verbunden sind.

14. Anzeigevorrichtung nach wenigstens einem der Ansprüche 6-13,
**dadurch gekennzeichnet,**
**daß** die Befestigungsschiene (11) einen im wesentlichen T-förmigen Querschnitt aufweist, wobei der T-Steg (28) auf der Innenseite (6) der Verglasung (7) aufgeklebt und ein T-Fuß (29) mit dem Anzeigefeld (4) und/oder der Verkleidung (15; 16, 17) lösbar befestigt ist.

15. Anzeigevorrichtung nach Anspruch 14,
**dadurch gekennzeichnet,**
**daß** auf der Innenseite (6) der Verglasung (7) zumindest im Bereich des aufgeklebten T-Stegs (28) eine Abdeckschicht (30), insbesondere durch Siebdruck, aufgebracht ist.

16. Anzeigevorrichtung nach wenigstens einem der vorangehenden Ansprüche,
**dadurch gekennzeichnet,**
**daß** das Anzeigefeld (4) eine Vielzahl von einzeln ansteuerbaren Einzelanzeigeelementen (31) aufweist.

17. Anzeigevorrichtung nach Anspruch 16, wobei jedes Einzelanzeigeelement (31) ein elektromagnetisch ansteuerbares, scheibchenförmiges, drehbar gelagertes und zweifarbiges Einzelanzeigeelement ist,
**dadurch gekennzeichnet,**
**daß** jedem Einzelanzeigeelement (31) eine Leuchtdiode (LED) zur Beleuchtung einer Sichtseite des Einzelanzeigeelements zugeordnet ist.

18. Anzeigevorrichtung nach wenigstens einem der vorangehenden Ansprüche,
**dadurch gekennzeichnet,**
**daß** eine insbesondere mit einem innerhalb eines Omnibusses angeordneten Bussystem verbundene und programmierbare Anzeigesteuerung innerhalb der Anzeigevorrichtung (1) angeordnet ist.

## Claims

1. A display device (1), in particular in a motor bus (2), comprising at least one fastening means (3) for releasably securing a display field (4), an observation window (5) being arranged at least between said display field (4) and a viewer, and the fastening means (3) being releasably secured directly to the inner side (6) of the observation window (5), said inner side (6) facing away from the viewer, and the display device (1) being provided with a covering (15) which covers the display field (4) at least on its back (14) that faces away from the glazing (7),
**characterized in**
**that** the covering (15) comprises a frame member (16) and a rear cover (17) which are releasably fixed to one another and which hold an edge flange (18) that surrounds the display field (4) at least partially.

2. A display device according to claim 1,
**characterized in**
**that** the observation window (5) is formed by a windowlike glazing (7).

3. A display device according to claim 1 or 2,
**characterized in**
**that** the glazing (7) is part of a front glazing (8) or rear glazing (9) or side glazing (10) in a motor bus (2).

4. A display device according to at least one of the claims 1 or 2,
**characterized in**
**that** the glazing (7) and the display device (1) are arranged above and in spaced relationship with a front glazing (8) or a rear glazing (9) or a side glazing (10) in a motor bus (2).

5. A display device according to at least one of the preceding claims,
**characterized in**
**that** the fastening means (3) is fixed by means of an adhesive to the inner side (6) of the glazing (7).

6. A display device according to at least one of the preceding claims,
**characterized in**
**that** the fastening means (3) is formed by fastening rails (11) extending at least partially along the display field (4).

7. A display device according to claim 6,
**characterized in**
**that** the fastening rail (11) extends at least along the longitudinal sides (12, 13) of a substantially rectangular display field (4).

8. A display device according to at least one of the preceding claims,
**characterized in**
**that** the edge flange (18) extends along the longitudinal sides (12, 13) of the display field (4) and that the frame member (16) is formed by two flat profiles (19, 20) which abut on the edge flange (18) on one side thereof, the edge flange (18) being arranged between said flat profiles (19, 20) and respective contact surfaces (21) formed on said rear cover (17) and being held therebetween in that said cover (17) and said flat profiles (19, 20) are releasably fastened, especially by means of screws (22).

9. A display device according to at least one of the preceding claims,
**characterized in**
**that** the edge flange (18) is provided with holes and/or recesses (23) for receiving therein screws (22) for releasably fastening the cover (17) and the flat profiles.

10. A display device according to at least one of the preceding claims,
**characterized in**
**that** the rear cover (17) has substantially the shape of a flat cover shell (24), a shell bottom (25) covering the rear of the display field (4) and shell walls (26) projecting from said shell bottom (25) in the direction of the observation window (5) or glazing (7) surrounding the display field (4) preferably on all sides thereof.

11. A display device according to claim 10,
**characterized in**
**that**, when the display field (4) is releasably secured to the fastening means (3), the free ends (27) of the shell walls (26) sealingly abut on the inner side (6) of the observation window (5) or glazing (7).

12. A display device according to at least one of the preceding claims,
**characterized in**
**that** the display field (4) and the covering (15; 16, 17) define a premountable constructional unit.

13. A display device according to at least one of the preceding claims,
**characterized in**
**that** the display field (4) and/or the covering (15; 16, 17) are releasably connected to the fastening rails (11) in the area of the edge flange (18) and of the flat profiles (19, 20), respectively.

14. A display device according to at least one of the claims 6 to 13,
**characterized in**
**that** the fastening rail (11) has a substantially T-shaped cross-section, the T-crossbar (28) being fixed to the inner side (6) of the glazing (7) by means of an adhesive, and a T-base (29) being releasably secured to the display field (4) and/or the covering (15; 16, 17).

15. A display device according to claim 14,
**characterized in**
**that** a masking layer (30) is applied to the inner side (6) of the glazing (7) at least in the area of the glued-on T-crossbar (28), said masking layer (30) being applied especially by means of screen printing.

16. A display device according to at least one of the preceding claims,
**characterized in**
**that** the display field (4) comprises a plurality of individual display elements (31) which are adapted to be activated individually.

17. A display device according to claim 16, in which each individual display element (31) is an electromagnetically activable, disk-shaped, rotatably supported and two-coloured individual display element,
**characterized in**
**that** each individual display element (31) has associated therewith a light-emitting diode (LED) for illuminating a visible side of the individual display element.

18. A display device according to at least one of the preceding claims,
**characterized in**
**that** a programmable display control, which is especially connected to a bus system arranged within a motor bus, is arranged within the display device (1).

## Revendications

1. Dispositif d'indication (1), en particulier dans un autobus (2), avec au moins une installation de fixation (3) destinée à fixer de manière amovible une zone d'indication (4), dans lequel au moins une fenêtre d'observation (5) est disposée entre la zone d'indication (4) et un observateur, dans lequel l'installation de fixation (3) est fixée de manière amovible directement sur la face intérieure (6) de la fenêtre d'observation (5), opposée à l'observateur, et le dispositif d'indication (1) présente un revêtement (15) obturant la zone d'indication (4) au moins sur sa face arrière (14) opposée à un vitrage (7)
**caractérisé en ce que**
le revêtement (15) couvre un élément formant cadre (16) et un couvercle arrière (17), qui sont fixés l'un à l'autre de manière amovible et par lesquels est maintenue au moins une bride de bord (18) entourant partiellement la zone d'indication (4).

2. Dispositif d'indication selon la revendication 1, **caractérisé en ce que** la fenêtre d'observation (5) est constituée du vitrage (7) en forme de plaque.

3. Dispositif d'indication selon la revendication 1 ou 2, **caractérisé en ce que** le vitrage (7) est une partie d'un vitrage avant (8) ou arrière (9) ou latéral (10) d'un autobus (2).

4. Dispositif d'indication selon au moins l'une quelconque des revendications 1 à 2, **caractérisé en ce que** le vitrage (7) et le dispositif d'indication (1) sont disposés au-dessus et à distance d'un vitrage avant (8) ou arrière (9) ou latéral (10) dans un autobus (2).

5. Dispositif d'indication selon au moins l'une quelconque des revendications précédentes, **caractérisé en ce que** l'installation de fixation (3) est collée sur la face intérieure (6) du vitrage (7).

6. Dispositif d'indication selon au moins l'une quelconque des revendications précédentes, **caractérisé en ce que** l'installation de fixation (3) est formée par des rails de fixation (11) s'étendant au moins en partie le long de la zone d'indication (4).

7. Dispositif d'indication selon la revendication 6, **caractérisé en ce que** le rail de fixation (11) s'étend au moins le long des côtés longitudinaux (12, 13) d'une zone d'indication (4) essentiellement rectangulaire.

8. Dispositif d'indication selon au moins l'une quelconque des revendications précédentes, **caractérisé en ce que** la bride de bord (18) s'étend le long des côtés longitudinaux (12, 13) de la zone d'indication (4) et l'élément formant cadre (16) est constitué de deux profils plats (19, 20), qui reposent d'un côté sur la bride de bord (18), et la bride de bord (18) étant disposée entre ces derniers et les surfaces de contact (21) correspondantes formées sur le couvercle arrière (17) et étant maintenue par fixation amovible, notamment au moyen de vis (22), par le couvercle (17) et les profils plats (19, 20) entre ceux-ci.

9. Dispositif d'indication selon au moins l'une quelconque des revendications précédentes, **caractérisé en ce que** la bride de bord (18) présente des alésages et/ou des évidements (23) pour la réception de vis (22) destinés à fixer de manière amovible le couvercle (17) et les profils plats.

10. Dispositif d'indication selon au moins l'une quelconque des revendications précédentes, **caractérisé en ce que** le couvercle arrière (17) présente essentiellement la forme d'un boîtier plat (24), un fond de boîtier (25) couvrant le fond de la zone d'indication (4) et des parois de boîtier (26) faisant saillie à partir du fond de boîtier (25) vers la fenêtre d'observation (5) ou le vitrage (7) entourent de préférence tous les côtés de la zone d'indication (4).

11. Dispositif d'indication selon la revendication 10, **caractérisé en ce que** les parois de boîtier (26), dont les extrémités libres (27) sont disposées à proximité de la zone d'indication (4) fixée de manière amovible sur l'installation de fixation (3), reposent de manière étanche sur la face intérieure (6) de la fenêtre d'observation (5) ou du vitrage (7).

12. Dispositif d'indication selon au moins l'une quelconque des revendications précédentes, **caractérisé en ce que** la zone d'indication (4) et le revêtement (15 ; 16, 17) forment une unité modulaire pré-assemblable.

13. Dispositif d'indication selon au moins l'une quelconque des revendications précédentes, **caractérisé en ce que** la zone d'indication (4) et/ou le revêtement (15 ; 16, 17) sont fixés de manière amovible aux rails de fixation (11) dans la région de la bride de bord (18) ou des profils plats (19, 20).

14. Dispositif d'indication selon au moins l'une quelconque des revendications 6 à 13, **caractérisé en ce que** le rail de fixation (11) présente une section essentiellement en forme de T, l'entretoise en T (28) étant collée sur la face intérieure (6) du vitrage (7) et un montant en T (29) étant fixé de manière amovible à la zone d'indication (4) et/ou au revêtement (15 ; 16, 17).

15. Dispositif d'indication selon la revendication 14, **caractérisé en ce qu'**une couche d'obturation (30) est appliquée, en particulier par sérigraphie, sur la face intérieure (6) du vitrage (7) au moins dans la région de l'entretoise en T (28) collée.

16. Dispositif d'indication selon au moins l'une quelconque des revendications précédentes, **caractérisé en ce que** la zone d'indication (4) présente une pluralité d'éléments d'indication individuels (31) activables individuellement.

17. Dispositif d'indication selon la revendication 16, dans lequel chaque élément d'indication individuel (31) est un élément d'indication individuel bicolore, activable de manière électromagnétique, en forme de disque et disposé de manière orientable, **caractérisé en ce que** chaque élément d'indication individuel (31) est affecté à une diode électroluminescente (DEL) destinée à éclairer une face avant de l'élément d'indication individuel.

18. Dispositif d'indication selon au moins l'une quelconque des revendications précédentes, **caractérisé en ce qu'**une commande d'indication programmable et reliée en particulier à un système de bus disposé à l'intérieur d'un autobus est disposée à l'intérieur du dispositif d'indication (1).
